# FASCICULE DE BREVET EUROPEEN

(11) **EP 1 041 798 B1**
(45) Date de publication et mention de la délivrance du brevet: **29.05.2002**
(21) Numéro de dépôt: 00400876.9
(22) Date de dépôt: 30.03.2000
(51) Int. Cl.: H04M 1/22, H04M 1/03

(54) **Appareil téléphonique mobile à écoute amplifiée**
Mobiltelefon mit verstärktem Abhören
Mobile telephone with amplified listening

(30) Priorité: 02.04.1999 FR 9904159
(43) Date de publication de la demande: 04.10.2000
(73) Titulaire: SAGEM SA, 75116 Paris (FR)
(72) Inventeur: Scherno, Alexis, 78600 Maisons Laffitte (FR)
(74) Mandataire: Bloch, Gérard

(56) Documents cités:
- WO-A-99/13627
- GB-A- 2 293 517
- PATENT ABSTRACTS OF JAPAN vol. 1998, no. 06, 30 avril 1998 (1998-04-30) & JP 10 042383 A (KENWOOD CORP), 13 février 1998 (1998-02-13)

## Description

L'invention concerne un appareil téléphonique mobile à écoute amplifiée.

D'emblée on notera que par "appareil téléphonique mobile" on entend désigner aussi bien un téléphone d'un réseau cellulaire, par exemple GSM, d'un réseau de satellites ou d'un réseau de radiotéléphonie local, qu'un combiné téléphonique, apparié à une base de téléphone sans fil, par exemple DECT.

Le développement actuel de la téléphonie mobile conduit les fabricants à réduire de plus en plus la taille des appareils téléphoniques mobiles (voir par exemple le document WO-A-9913627). Or, pour bénéficier, avec un téléphone, d'une écoute amplifiée de qualité, il faut impérativement prévoir un volume acoustique suffisant dans le téléphone. L'écoute amplifiée semble donc incompatible avec la tendance actuelle visant à réduire la taille des appareils téléphoniques mobiles.

La demanderesse a néanmoins cherché à doter un appareil téléphonique mobile d'une écoute amplifiée de qualité, sans augmenter de façon rédhibitoire la taille de l'appareil.

A cet effet, l'invention concerne un appareil téléphonique mobile comprenant un haut-parleur, des moyens d'affichage et des moyens d'éclairage des moyens d'affichage, caractérisé par le fait qu'il comprend une boîte acoustique d'amplification du son du haut-parleur, comportant une paroi faisant fonction de guide de lumière pour guider la lumière, émise par une source d'éclairage, vers les moyens d'affichage.

Avantageusement, les moyens d'affichage sont montés sur la boîte acoustique.

Dans l'art antérieur, le haut-parleur et les moyens d'affichage étaient montés sur une carte support de circuit imprimé et disposés côte à côte. L'invention consiste donc à avoir modifier cette disposition pour faire jouer à la boîte acoustique un double rôle d'amplification acoustique et de guide de lumière.

Avantageusement, la paroi de la boîte acoustique ménage un logement de réception de la source d'éclairage.

Avantageusement encore, la paroi de la boîte acoustique comporte une carte support de circuit imprimé.

La paroi de la boîte acoustique comportant un logement de réception de la source d'éclairage ainsi que la carte support de circuit imprimé, on réduit encore la taille de l'appareil téléphonique.

De préférence, il est ménagé entre la paroi de la boîte acoustique et les moyens d'affichage un guide acoustique pour conduire le son du haut-parleur vers l'extérieur de l'appareil.

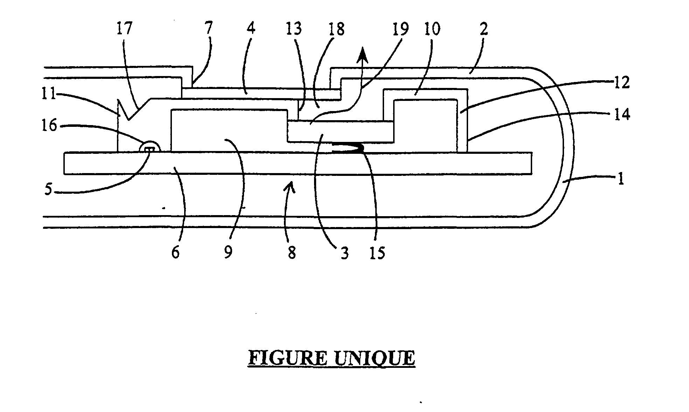

L'invention sera mieux comprise à l'aide de la description suivante d'une forme de réalisation particulière de l'appareil téléphonique mobile de l'invention, en référence à la figure unique annexée qui représente une vue en coupe latérale partielle de l'appareil.

L'appareil téléphonique représenté est un téléphone mobile d'un réseau cellulaire, en l'espèce GSM.

Par souci de clarté, seuls les éléments nécessaires à la compréhension de l'invention vont maintenant être explicités.

Le téléphone comprend un boîtier 1, avec une face avant 2, et, à l'intérieur du boîtier 1, un haut-parleur 3, un afficheur 4, une source 5 d'éclairage de l'afficheur 4, en l'espèce une diode électroluminescente (LED), et une carte 6 support de circuit imprimé.

La face avant 2 du boîtier 1 ménage une ouverture 7, au droit de laquelle s'étend l'afficheur 4.

Le téléphone comprend en outre une boîte acoustique 8 renfermant, à l'intérieur d'une paroi 14, un volume acoustique 9 suffisant pour amplifier le son du haut-parleur 3. La paroi 14 comporte une partie avant 10, des parties latérales 11, 12 et, à l'arrière, la carte 6 support de circuit imprimé.

La partie avant 10 de la paroi 14 ménage une ouverture 13 de sortie du son du haut-parleur 3.

Le haut-parleur 3, fixé à la boîte acoustique 8, est situé à l'intérieur de celle-ci, au droit et à proximité de l'ouverture 13, et connecté au circuit imprimé de la carte support 6, par le biais d'une languette de connexion 15. Le haut-parleur 3 fait ainsi partie intégrante de la paroi 14 de la boîte acoustique 8.

L'afficheur 4 est monté sur la partie avant 10 de la paroi 14. En d'autres termes, l'afficheur 4 s'étend contre et à l'avant de la partie avant 10 de la paroi 14.

La partie latérale 11 de la paroi 14 ménage un logement 16 de réception de la source d'éclairage 5, adjacent à la carte support 6. La source d'éclairage 5 est montée sur la carte support 6 et connectée au circuit imprimé.

Les parties latérale 11 et ayant 10 de la paroi 14 font fonction de guide de lumière pour guider la lumière, émise par la source d'éclairage 5, vers l'afficheur 4 et ainsi éclairer celui-ci par l'arrière. La partie avant 10 comprend une surface inclinée 17, située sensiblement au droit du logement 16 de réception de la source d'éclairage 5, destinée à réfléchir et à orienter la lumière émise par la source d'éclairage 5 vers l'afficheur 4.

L'afficheur 4 s'étend en partie au droit de l'ouverture 13 de passage du son, le haut-parleur 3 et l'afficheur 4 s'étendant partiellement en regard l'un de l'autre. Il est ainsi ménagé un guide acoustique 18, destiné à conduire le son du haut-parleur 3 vers l'extérieur du téléphone, entre la partie avant 10 de la paroi 14 et l'afficheur 4. Par ailleurs, la face avant 2 ménage, sensiblement dans le prolongement du guide acoustique 18, une pluralité de perforations de passage du son.

En fonctionnement, le son émis par le haut-parleur 3 est amplifié par la boîte acoustique 8 et sort de l'appareil par le guide acoustique 18 puis à travers les perforations de la face avant 2, comme indiqué par la flèche 19.

Par ailleurs, la source d'éclairage 5 émet de la lumière qui pénètre dans la partie latérale 11 de la paroi 14 de la boîte acoustique 8 et, après réflexion sur la surface inclinée 17, se propage dans la partie avant 10 de la paroi 14, située contre et derrière l'afficheur 4, en éclairant ainsi celui-ci par l'arrière.

## Revendications

1. Appareil téléphonique mobile comprenant un haut-parleur (3), des moyens d'affichage (4) et des moyens (5, 14) d'éclairage des moyens d'affichage (4), **caractérisé par le fait qu'**il comprend une boîte acoustique (8) d'amplification du son du haut-parleur (3), comportant une paroi (14) faisant fonction de guide de lumière pour guider la lumière, émise par une source d'éclairage (5), vers les moyens d'affichage (4).

2. Appareil selon la revendication 1, dans lequel les moyens d'affichage (4) sont montés sur la boîte acoustique (8).

3. Appareil selon l'une des revendications 1 et 2, dans lequel la paroi (14) de la boîte acoustique (14) ménage un logement (16) de réception de la source d'éclairage (5).

4. Appareil selon l'une des revendications 1 à 3, dans lequel la paroi (14) de la boîte acoustique (8) comporte une carte (6) support de circuit imprimé.

5. Appareil selon l'une des revendications 1 à 4, dans lequel il est ménagé entre la paroi (14) de la boîte acoustique (8) et les moyens d'affichage (4) un guide acoustique (18) pour conduire le son du haut-parleur (3) vers l'extérieur de l'appareil.

## Claims

1. Mobile telephone apparatus comprising a loudspeaker (3), display means (4) and means (5, 14) for illuminating the display means (4), **characterised by** the fact that it comprises an acoustic box (8) for amplifying the sound from the loud-speaker (3) including a wall (14) acting as a light guide to guide the light emitted by a lighting source (5) towards the display means (4).

2. Apparatus according to claim 1, wherein the display means (4) are mounted on the acoustic box (8).

3. Apparatus according to one of claims 1 and 2, wherein the wall (14) of the acoustic box (14) provides a receiver (16) for receiving the lighting source (5).

4. Apparatus according to one of claims 1 to 3, wherein the wall (14) of the acoustic box (8) comprises a printed circuit support card (6).

5. Apparatus according to one of claims 1 to 4, wherein an acoustic guide (18) is arranged between the wall (14) of the acoustic box (8) and the display means (4) to lead the sound of the loudspeaker (3) towards the outside of the telephone.

## Patentansprüche

1. Mobiltelefonapparat, enthaltend einen Lautsprecher (3), Anzeigemittel (4) und Beleuchtungsmittel (5,14) für die Anzeigemittel (4), **dadurch gekennzeichnet, daß** er ein akustisches Gehäuse (8) zur Verstärkung des Schalls des Lautsprechers (3) mit einer Wand (14) aufweist, die eine Lichtleitungsfunktion zum Leiten des von einer Lichtquelle (5) emittierten Lichts auf die Anzeigemittel (4) erfüllt.

2. Apparat nach Anspruch 1, wobei die Anzeigemittel (4) an dem akustischen Gehäuse (8) montiert sind.

3. Apparat nach einem der Ansprüche 1 und 2, wobei die Wand (14) des akustischen Gehäuses (8) eine Ausnehmung (16) zur Aufnahme der Lichtquelle (5) enthält.

4. Apparat nach einem der Ansprüche 1 bis 3, wobei die Wand (14) des akustischen Gehäuses (8) eine gedruckte Trägerplatine (6) aufweist.

5. Apparat nach einem der Ansprüche 1 bis 4, wobei er zwischen der Wand (14) des akustischen Gehäuses (8) und den Anzeigemitteln (4) mit einem akustischen Leiter (18) zum Leiten des Schalls des Lautsprechers (3) zur Apparateaußenseite versehen ist.
